# EUROPÄISCHE PATENTSCHRIFT

(11) **EP 0 493 735 B1**
(45) Veröffentlichungstag und Bekanntmachung des Hinweises auf die Patenterteilung: **25.09.1996**
(21) Anmeldenummer: 91121480.7
(22) Anmeldetag: 14.12.1991
(51) Int. Cl.: F16D 3/41

(54) **Anordnung zum Abdichten der Lager eines Kreuzgelenks**
Sealing arrangement of a universal joint bearing
Assemblage d'étanchéité d'un palier de joint universel

(30) Priorität: 22.12.1990 DE 4041498
(43) Veröffentlichungstag der Anmeldung: 08.07.1992
(73) Patentinhaber: ZF FRIEDRICHSHAFEN Aktiengesellschaft, D-88038 Friedrichshafen (DE)
(72) Erfinder: Katzensteiner, Josef Roman, W-8390 Passau (DE)

(56) Entgegenhaltungen:
- EP-A- 0 274 584
- DE-A- 1 405 235
- DE-A- 2 144 401
- DE-A- 3 118 430
- DE-A- 3 818 330
- DE-B- 1 266 593
- DE-B- 2 708 137
- DE-U- 8 805 833
- FR-A- 1 035 548
- FR-A- 1 562 511
- FR-A- 2 389 037
- FR-A- 2 450 976
- FR-A- 2 568 330
- US-A- 3 635 535

## Beschreibung

Die Erfindung betrifft eine Anordnung zum Abdichten eines Kreuzgelenks mit den Merkmalen:
- ein Zapfenkreuz verbindet über vier Lager zwei Gabeln einer Kreuzgelenkwelle;
- jeweils eine napfförmige Büchse in einer Bohrung einer Gabel und ein Zapfen des Zapfenkreuzes bilden mit zylindrischen Laufflächen ein Lager;
- ein Dichtring hat einen Elastomerring in einer Stützhülse;
- die Stützhülse sitzt übergeknöpft fest und dicht auf einem Kragen der Büchse;
- mindestens eine Dichtlippe des Elastomerrings läuft auf einer Mantelfläche des Zapfens;
- die Dichtlippe läßt bei Überdruck in dem Lager Fett aus dem Lager austreten.

Die Lager eines Kreuzgelenks werden meistens mit Fett gefüllt und immer wieder nachgeschmiert. Das Fett soll möglichst schon außerhalb der Dichtlippe von außen kommenden Schmutz abfangen und von den Laufflächen des Lagers fernhalten. Beim Nachschmieren wird eingedrungener Schmutz zusammen mit dem alten Fett immer wieder entfernt und die Fettvorlage erneuert.

Eine Dichtung dieser Art ist aus der FR-A 25 68 330 bekannt. Bei starker Belastung, beispielsweise bei einer im Schlamm eines Reisfeldes laufenden Kreuzgelenkwelle, befriedigt die Lebensdauer der mit dieser bekannten Dichtung geschützten Lager nicht mehr, weil der Schmutz früher oder später nicht nur an der Dichtlippe vorbei, sondern auch durch den Spalt zwischen dem Kragen der Büchse und der Stützhülse hindurch in das Lager eindringen und die Laufflächen zerstören kann.

Der Erfindung liegt die Aufgabe zugrunde, eine Dichtung der eingangs beschriebenen Art zu schaffen, bei der die Stützhülse zuverlässig dicht auf dem Kragen der Büchse befestigt ist.

Diese Aufgabe wird mit den Merkmalen nach Anspruch 1 gelöst, weil der Elastomerring den Stützring gegen den Kragen dichtet.

Mit einem Halbkegelwinkel der Mantelfläche zwischen 0° und 15°, insbesondere mit einem Halbkegelwinkel von 0°, ist der Überdruck, bei dem die Dichtlippe Fett austreten läßt, kaum (max. 15°) oder gar nicht (0°) abhängig von einer Verschiebung der Dichtlippe in Richtung der Zapfenachse. Dadurch öffnen die Dichtlippen eines Lagers immer bei ungefähr (max. 15°) oder genau (0°) dem gleichen Überdruck, und es können auch zwei oder drei Dichtlippen hintereinander angeordnet werden, weil die Vorspannung der einzelnen Dichtlippe nicht mehr zur Sicherheit überhöht werden muß, um auch in ihrer äußeren Extremlage noch an der Mantelfläche anzuliegen. Ein gegebener Druck einer Nachschmiereinrichtung reicht dann aus, um auch in der inneren Extremlage die Dichtlippen zu öffnen und Fett auszutreiben (Anspruch 2).

Mit den Nuten in dem Dichtring ist sichergestellt, daß das Nachschmieren immer unbehindert möglich ist (Anspruch 3).

Mit einer zusätzlichen, auf einer Stirnfläche des Zapfens laufenden Dichtlippe wird die Verschleißreserve der Dichtung noch weiter erhöht (Anspruch 4).

Der Abstreifring, der mit mindestens einer Abstreiflippe auf der Stützhülse läuft, bildet einen zusätzlichen Schutz gegen Schmutz, der von außen in das Lager eindringen will (Anspruch 5).

Wälzlager mit Nadeln oder Rollen als Wälzkörper sind als Lager für ein Kreuzgelenk besonders gut geeignet, weil sie hoch belastbar, sehr reibungsarm und bei Verschleiß leicht austauschbar sind (Anspruch 6).

Wenn bei einer Kreuzgelenkwelle mit einer Doppelgabel Fett von einem Schmiernippel in der Doppelgabel mittelbar über (dem Schmiernippel) benachbarte Lager den übrigen Lagern zugeführt wird, und wenn der Überdruck, bei dem die Dichtlippen öffnen, bei den benachbarten Lagern höher ist als bei den übrigen Lagern, kann man mit dem richtigen Druck in der Nachschmiereinrichtung erreichen, daß an allen Lagern gleich viel Fett austritt (Anspruch 7).

Damit die Dichtlippen bei unterschiedlichem Überdruck öffnen, kann man beispielsweise den Elastomerring aus zwei verschiedenen Werkstoffen mit unterschiedlicher Elastizität oder das Zapfenkreuz mit zwei verschiedenen Durchmessern an den Laufstellen der Dichtlippen fertigen. Wenn die Lager selten nachgeschmiert werden müssen, kann ein Verschlußstopfen den Schmiernippel ersetzen.

Die Merkmale nach Anspruch 2 bis Anspruch 6 sind an sich bekannt, aber nicht in Verbindung mit den Merkmalen nach Anspruch 1. Sinnvolle Kombinationen aus Merkmalen nach Anspruch 2 bis Anspruch 6 mit den Merkmalen nach Anspruch 1 ergeben Ausführungsbeispiele nach der Erfindung.

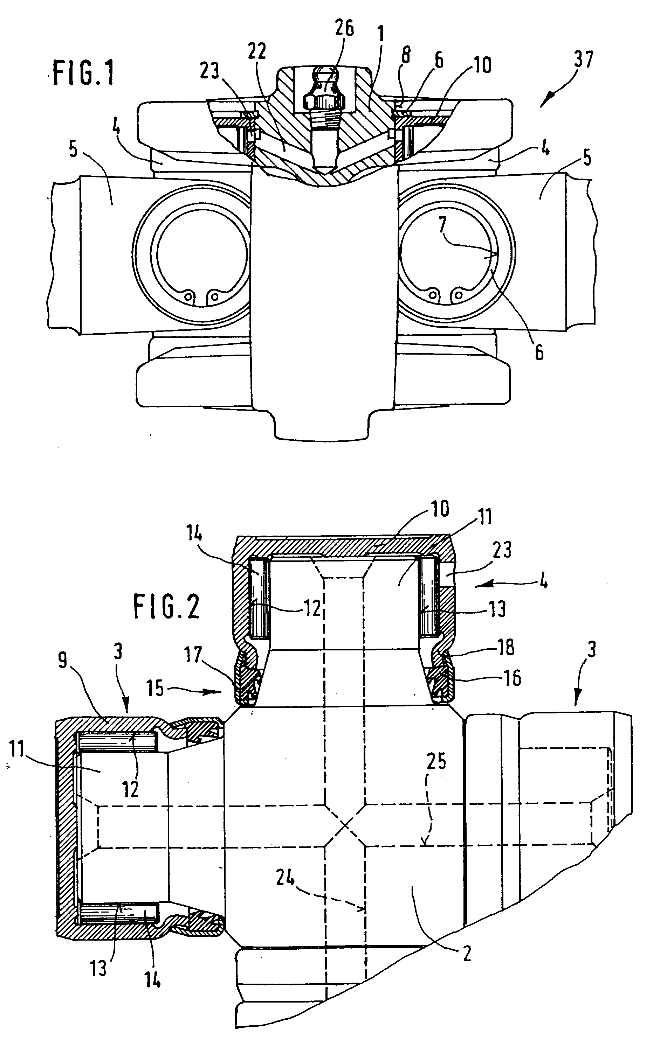

In der Zeichnung sind einige dieser Ausführungsbeispiele dargestellt. Es zeigen
- Fig. 1: einen Abschnitt einer Kreuzgelenkwelle,
- Fig. 2: ein Zapfenkreuz mit seinen Lagern und

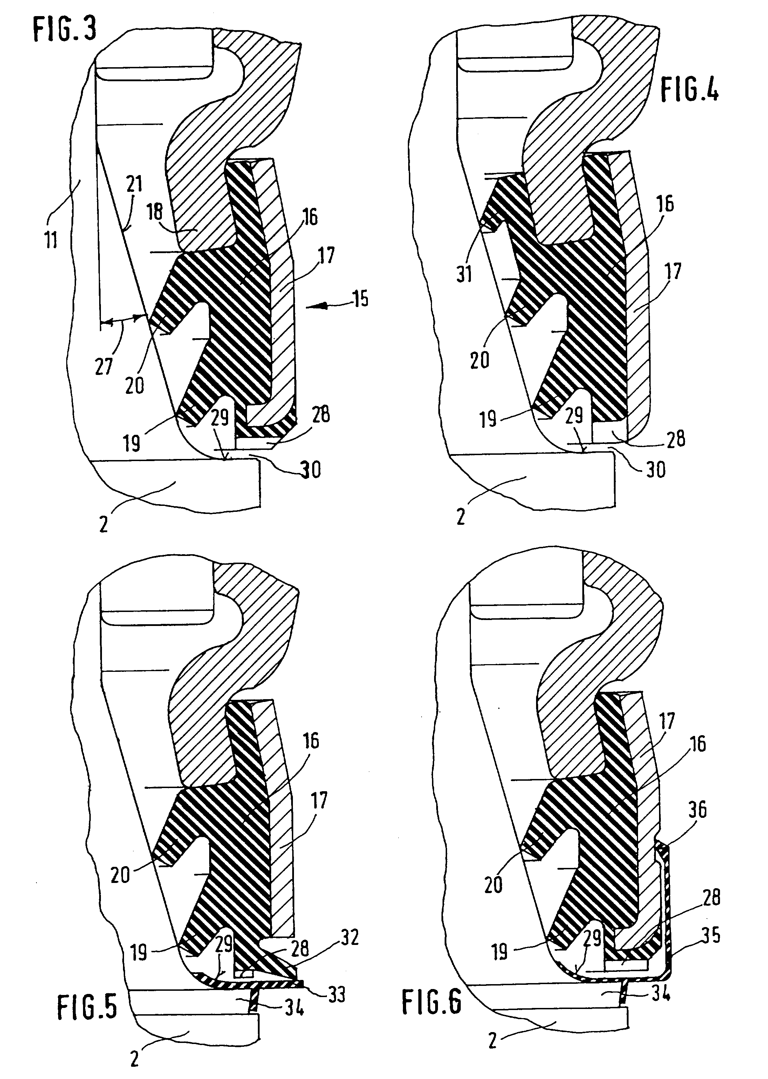

- Fig. 3 - Fig. 6: Ausschnitte aus Querschnitten durch ein Zapfenkreuz mit seinen Lagern.

Fig. 1 und 2:
Eine Doppelgabel 1 verbindet über zwei Zapfenkreuze 2 mit je vier Lagern 3, 4 zwei einfache Gabeln 5. Sicherungsringe 6 außen in Bohrungen 7, 8 der einfachen Gabeln 5 und der Doppelgabel 1 stützen napfförmige Büchsen 9, 10 der Lager 3, 4. Kanäle 24, 25 in den Zapfenkreuzen 2 verbinden die vier Lager 3, 4 jedes Zapfenkreuzes 2 miteinander. Ein Schmiernippel 26 in der Doppelgabel 1 ist über Kanäle 22 in der Doppelgabel 1 und Kanäle 23 in den Büchsen 10 von zwei benachbarten Lagern 4 in der Doppelgabel 1 mit je einem Lager 4 jedes Zapfenkreuzes 2 vorbunden. Die Büchsen 9, 10 in den Bohrungen 7, 8 und Zapfen 11 der Zapfenkreuze 2 bilden mit zylindrischen Laufflächen 12, 13 und zylindrischen Wälzkörpern 14 Wälzlager und damit die Lager 3, 4. Ein Dichtring 15 besteht aus einem Elastomerring 16 und einer Stützhülse 17. Der Dichtring 15 ist über einen Kragen 18 der Büchse 9, 10 geknöpft und sitzt fest auf dem Kragen 18. Der Elastomerring 16 dichtet die Stützhülse 17 gegen den Kragen 18.

Fig. 3:
Der Elastomerring 16 ist durch Kleben oder Vulkanisieren fest mit der Stützhülse 17 verbunden. Der Elastomerring 16 bildet zwei Dichtlippen 19, 20. Die Dichtlippen 19, 20 laufen auf einer Mantelfläche 21 des Zapfens 11. Ein Halbkegelwinkel 27 der Mantelfläche 21 beträgt 15°. Nuten 28 in dem Dichtring 15 bilden mit einer Stirnfläche 29 des Zapfenkreuzes 2 Öffnungen für austretendes Fett, wenn Überdruck in dem Lager 3 einen Abstand 30 zwischen dem Dichtring 15 und der Stirnfläche 29 aufhebt und die Dichtlippen 19, 20 öffnet. Die Nuten 28 sind in dem Elastomerring 16 angeordnet.

Fig. 4:
Der Elastomerring 16 des Dichtringes 15 bildet drei Dichtlippen 19, 20, 31. Alle drei Dichtlippen 19, 20, 31 laufen auf der Mantelfläche 21 des Zapfens 11. Die Nuten 28 sind in der Stützhülse 17 angeordnet.

Fig. 5:
Der Elastomerring 16 bildet zwei Dichtlippen 19, 20, die auf der Mantelfläche 21 laufen, und eine weitere Dichtlippe 32, die auf einer Stirnfläche 29 des Zapfenkreuzes 2 läuft. Das Zapfenkreuz 2 ist geschützt durch einen Verschleißring 33, der über einen Kragen 34 des Zapfens 11 geknöpft ist, fest und dicht auf dem Kragen 34 sitzt und die Stirnfläche 29 des Zapfenkreuzes 2 bildet. Der Verschleißring 33 besteht aus einem Polyamid oder einem anderen Kunststoff mit geringem Reibwert und großer Verschleißfestigkeit.

Fig. 6:
Ein Abstreifring 35 aus einem Polyamid sitzt fest und dicht auf dem Kragen 34 des Zapfens 11 und läuft mit einer Abstreiflippe 36 auf der Stützhülse 17 des Dichtringes 15.

### Bezugszeichen:

- 1: Doppelgabel 34 Kragen
- 2: Zapfenkreuz 35 Abstreifring
- 3: Lager 36 Abstreiflippe
- 4: Lager 37 Kreuzgelenkwelle
- 5: Gabel
- 6: Sicherungsring
- 7: Bohrung
- 8: Bohrung
- 9: Büchse
- 10: Büchse
- 11: Zapfen
- 12: Lauffläche
- 13: Lauffläche
- 14: Wälzkörper
- 15: Dichtring
- 16: Elastomerring
- 17: Stützhülse
- 18: Kragen
- 19: Dichtlippe
- 20: Dichtlippe
- 21: Mantelfläche
- 22: Kanal
- 23: Kanal
- 24: Kanal
- 25: Kanal
- 26: Schmiernippel
- 27: Halbkegelwinkel
- 28: Nut
- 29: Stirnfläche
- 30: Abstand
- 31: Dichtlippe
- 32: Dichtlippe
- 33: Verschleißring
- 34: Kragen
- 35: Abstreifring
- 36: Abstreiflippe
- 37: Kreuzgelenkwelle

## Patentansprüche

1. Anordnung zum Abdichten der Lager eines Kreuzgelenks mit den Merkmalen:
- ein Zapfenkreuz (2) verbindet über vier Lager (3) zwei Gabeln (5) einer Kreuzgelenkwelle (37);
- jeweils eine napfförmige Büchse (9) in einer Bohrung (7) einer Gabel (5) und ein Zapfen (11) des Zapfenkreuzes (2) bilden mit zylindrischen Laufflächen (12, 13) ein Lager (3);
- ein Dichtring (15) hat einen Elastomerring (16) in einer Stützhülse (17);
- die Stützhülse (17) sitzt übergeknöpft fest und dicht auf einem Kragen (18) der Büchse (9);
- mindestens eine Dichtlippe (19) des Elastomerrings (16) läuft auf einer Mantelfläche (21) des Zapfens (11);
- die Dichtlippe (19) läßt bei Überdruck in dem Lager (3) Fett aus dem Lager (3) austreten,
**gekennzeichnet** duch das Merkmal:
die Stützhülse (17) ist mittelbar unter Zwischenschaltung des Elastomerrings (16) auf dem Kragen (18) der Büchse (9) übergeknöpft, so daß der Elastomerring (16) die Stützhülse (17) gegen den Kragen (18) dichtet.

2. Anordnung zum Abdichten nach Anspruch 1 mit dem Merkmal:
die Mantelfläche (21) hat einen Halbkegelwinkel (27) zwischen 0° und 15°.

3. Anordnung zum Abdichten nach Anspruch 1 mit den Merkmalen:
- der Dichtring (15) läuft mit Abstand (30) zu einer Stirnfläche (29) des Zapfenkreuzes (2);
- wenn Überdruck in dem Lager (3) den Abstand (30) aufhebt, bilden Nuten (28) in dem Dichtring (15) mit der Stirnfläche (29) des Zapfenkreuzes (2) Öffnungen für austretendes Fett.

4. Anordnung zum Abdichten nach Anspruch 1 mit dem Merkmal: mindestens eine weitere Dichtlippe (32) läuft auf einer Stirnfläche (29) des Zapfenkreuzes (2).

5. Anordnung zum Abdichten nach Anspruch 1 mit dem Merkmal: ein Abstreifring (35) sitzt fest und dicht auf dem Zapfen (11) und läuft mit mindestens einer Abstreiflippe (36) auf der Stützhülse (17).

6. Anordnung zum Abdichten nach Anspruch 1 mit dem Merkmal: die Lager (3, 4) sind Wälzlager mit zylindrischen Wälzkörpern (14) zwischen den Laufflächen (12, 13).

7. Anordnung zum Abdichten nach Anspruch 1 mit den Merkmalen:
- die Kreuzgelenkwelle (37) ist eine Doppelgelenkwelle mit einer Doppelgabel (1) zwischen zwei einfachen Gabeln (5) und mit zwei Zapfenkreuzen (2) mit je vier Lagern (3, 4);
- Kanäle 24, 25 in den Zapfenkreuzen 2 verbinden die vier Lager 3, 4 jedes Zapfenkreuzes 2 miteinander;
- mindestens ein Schmiernippel 26 in der Doppelgabel 1 ist über Kanäle 22 in der Doppelgabel 1 und Kanäle 23 in den Büchsen 10 von zwei benachbarten Lagern 4 in der Doppelgabel 1 mit je einem Lager 4 jedes Zapfenkreuzes 2 verbunden;
- der Überdruck, bei dem die Dichtlippen (19, 20) Fett austreten lassen, ist bei den benachbarten Lagern (4) höher als bei den übrigen Lagern (3).

## Claims

1. Arrangement for sealing the bearings of a universal joint having the features:
- a journal cross (2) connects two forks (5) of a universal joint shaft (37) via four bearings (3);
- a bowl-shaped bush (9) in a bore (7) in a fork (5) and a journal (11) of the journal cross (2) in each case with cylindrical running surfaces (12, 13) form a bearing (3);
- a sealing ring (15) has an elastomeric ring (16) in a supporting sleeve (17);
- the supporting sleeve (17) is rigidly and tightly buttoned on a collar (18) of the bush (9);
- at least one sealing lip (19) of the elastomeric ring (16) runs on an external surface (21) of the journal (11);
- the sealing lip (19) allows grease to issue from the bearing (3) when there is excess pressure in the bearing (3),
characterised by the feature: the supporting sleeve (17) is buttoned indirectly with interposition of the elastomeric ring (16) on the collar (18) of the bush (9) so the elastomeric ring (16) seals the supporting sleeve (17) against the collar (18).

2. Sealing arrangement according to claim 1 with the feature:
the external surface (21) has a half cone angle (27) between 0° and 15°.

3. Sealing arrangement according to claim 1, with the features:
- the sealing ring (15) runs with spacing (30) from an end face (29) of the journal cross (2);
- when excess pressure in the bearing (3) removes the spacing (30), grooves (28) in the sealing ring (15) form orifices with the end face (29) of the journal cross (2) for issuing grease.

4. Sealing arrangement according to claim 1 with the feature:
at least one further sealing lip (32) runs on an end face (29) of the journal cross (2).

5. Sealing arrangement according to claim 1 with the feature:
a stripping ring (35) rests rigidly and tightly on the journal (11) and runs with at least one stripping lip (36) on the supporting sleeve (17).

6. Sealing arrangement according to claim 1 with the feature:
the bearings (3, 4) are roller bearings with cylindrical rolling elements (14) between the running faces (12, 13).

7. Sealing arrangement according to claim 1 with the features:
- the universal joint shaft (37) is a double-jointed shaft with a double fork (1) between two simple forks (5) and with two journal crosses (2) with four respective bearings (3, 4);
- channels (24, 25) in the journal crosses (2) connect the four bearings (3, 4) of each journal cross (2) to one another;
- at least one lubricating nipple (26) in the double fork (1) is connected via channels (22) in the double fork (1) and channels (23) in the bushes (10) of two adjacent bearings (4) in the double fork (1) with a respective bearing (4) of each journal cross (2);
- the excess pressure at which the sealing lips (19, 20 allow grease to issue is higher with the adjacent bearings (4) than with the other bearings (3).

## Revendications

1. Dispositif d'étanchéité des paliers d'un joint à croisillon présentant les caractéristiques suivantes:
- grâce à quatre paliers (3), un croisillon (2) relie deux fourchettes (5) d'un arbre à joint de cardan (37);
- un palier (3) est formé avec des pistes de roulement cylindriques (12, 13) par une douille en forme de cuvette (9) dans un alésage (7) d'une fourchette (5) et un tourillon (11) du croisillon (2);
- une bague d'étanchéité (15) comporte une bague en plastique (16) dans une douille de support (17);
- la douille de support est bien fixée au bord (18) de la douille (9) pour qu'elle soit étanche;
- au moins une lèvre d'étanchéité (19) de la bague en plastique (16) est montée sur une périphérie (21) du tourillon (11);
- en cas de surpression dans le roulement (3), la lèvre d'étanchéité laisse le lubrifiant s'échapper du roulement (3),
**caractérisé** par l'attribut suivant:
la bague en plastique (16) se trouve entre la douille de support (17) et le bord (18) de la douille (9); la douille de support (17) est indirectement fixée sur le bord (18) de la cuvette (9), si bien que la bague en plastique (16) assure l'étanchéité de la douille de support (17) avec le bord (18).

2. Dispositif d'étanchéité selon la revendication 1 caractérisé en ce que:
- l'angle de demi-cône de la périphérie (21) est compris entre 0° et 15°.

3. Dispositif d'étanchéité selon la revendication 1 caractérisé en ce que:
- la bague d'étanchéité (15) est montée à une certaine distance d'une surface frontale (29) du croisillon (2);
- lorsque cette distance (30) est réduite par la surpression dans le palier (3), les rainures (28) dans la bague d'étanchéité (15) forment des ouvertures avec la surface frontale (29) du croisillon (2) pour le lubrifiant en excès.

4. Dispositif d'étanchéité selon la revendication 1 caractérisé en ce que:
- au moins une autre lèvre d'étanchéité (32) est montée sur une surface frontale (29) du croisillon (2).

5. Dispositif d'étanchéité selon la revendication 1 caractérisé en ce que:
- une bague racleuse (35) est bien fixée sur le tourillon (11) et est montée sur la douille de support (17) avec au moins une lèvre racleuse (36).

6. Dispositif d'étanchéité selon la revendication 1 caractérisé en ce que:
- les paliers (3, 4) sont des paliers à roulement avec des corps de roulement cylindriques (14) entre les pistes de roulement (12, 13).

7. Dispositif d'étanchéité selon la revendication 1 caractérisé en ce que:
- l'arbre à joint de cardan (37) est un arbre à double joint de cardan avec une fourchette double (1) entre deux fourchettes simples (5) et avec deux croisillons à quatre paliers (3, 4) chacun;
- les canaux 24, 25 dans les croisillons (2) relient les quatre paliers (3, 4) de chaque croisillon (2);
- au moins un graisseur (26) dans la fourchette double (1) est relié par des canaux (22) dans la fourchette double (1) et par d'autres canaux (23) dans les douilles (10) de deux paliers voisins (4) dans la fourchette double (1) avec chacun un palier de chaque croisillon (2);
- la surpression à partir de laquelle les lèvres d'étanchéité (19, 20) laissent le lubrifiant s'échapper, est plus élevée sur les paliers voisins (4) que sur les autres paliers (3).
